# EUROPEAN PATENT APPLICATION

(11) **EP 4 585 041 A1**
(43) Date of publication of application: **16.07.2025**
(21) Application number: 25151358.6
(22) Date of filing: 10.01.2025
(51) Int. Cl.: A01K 95/02

(54) **DROPPER**

(30) Priority: 15.01.2024 GB 202400524; 22.10.2024 GB 202415546
(71) Applicant: Fox International Group Limited, Warley Brentwood Essex CM14 5EG (GB)
(72) Inventor: STUART, Frazer, Brentwood, CM14 5EG (GB)
(74) Representative: Mathys & Squire

(57) **Abstract**

The disclosure provides a dropper for a helicopter rig. The dropper includes a first member configured to be connected to a mainline of the helicopter rig. A second member pivotably connects to the first member so as to provide an open position and a closed position. A biasing means biases the dropper to the closed position. The dropper has holding means to retain a fishing weight when the dropper is in the closed position and to allow release of the fishing weight when the dropper is in the open position. The dropper is arranged such that, when a fish is hooked, tension in the hookline and tension in the mainline causes the first member to pivot, relative to the second member, to the open position. The disclosure also provides a helicopter rig having a mainline, a hookline branched from and rotatable about the mainline, and a dropper.

## Description

### Background to the Invention

This invention relates to a dropper, that is, a device for releasing a weight from a fishing rig. Such release of the weight can be desirable for various reasons when a fish is hooked.

In a paternoster rig, a weight is attached at the end of a mainline, that is, the line running from the fishing reel, or to a distal extension of the mainline (a "leader"). A hookline (also called a "hooklink" or "hooklength") is attached to the mainline or leader as a branch, and terminates at the fishhook.

United States Patent 2,830,400 describes a release device for a paternoster rig. The devices comprising a pair of mutually pivoted flat side plates. One of the plates is connected to the mainline or leader and the other is connected to the hookline. The weight is suspended from intersecting notches in the plates. In the event of a strike, the tension in the hookline causes the plates to pivot to a position in which the notches no longer intersect, and are opened, releasing the weight.

A "helicopter rig" is a paternoster rig in which the attachment of the hookline to the mainline or leader allows the hookline to rotate around the mainline or leader with no twisting. Commonly, the hookline is tied at least indirectly to a "swivel", which is a ring, for example of metal, through which the mainline or leader extends. As used herein, the term "helicopter rig" includes a "chod rig".

The device in United States Patent 2,830,400, and similar devices with mutually pivoting members, are unsuitable for helicopter rigs.

European Patent Publication 2735228A1 describes a dropper for a helicopter rig. An inner sleeve sits partially within an outer sleeve. The weight is carried by a weight hook which is connected to the outer sleeve. A spring biases the inner sleeve to a position in which it covers the end of the weight hook, retaining the weight. The mainline or leader is threaded into the top of the dropper, around a connecting device connected to the inner sleeve, and back out of the top of the dropper. When a bite occurs, the hookline pulls the connecting device and the inner sleeve upwardly into the outer sleeve, exposing the weight hook and releasing the weight.

A problem with this and other known droppers for helicopter rigs is that excess tension in the mainline or leader can activate the dropper and release the weight even in the absence of a bite. Such excess tension can, for example, occur during casting, due to the inertia of the weight.

### Summary of the invention

It is an aim of the invention to provide a dropper for a helicopter rig that prevents inadvertent release of the weight.

The present invention consists in a dropper for a helicopter rig, the dropper comprising a first member for attachment to a fishing line, a second member pivoted to the first member, the first and second members being configured to cause a holding means to retain at least one fishing weight in a mutually closed position and to allow release of the at least one weight in a mutually open position, the second member having an abutment surface, said surface arranged to be acted on at least indirectly by a hookline that is branched from the fishing line so as to be freely rotatable thereabout, to cause mutual opening of the first and second members when a fish is hooked.

The two members will only open when tension is exerted in the hookline, for example when the hookline causes a swivel to act on the second member. Thus, the two members remain closed if tension is only exerted between the weight and the angler.

The first and second members may be arranged to close with a scissoring action, i.e. a surface of the first member opposes a surface of the second member and these surfaces remain substantially in the same plane, or respective mutually parallel planes, in both the open and closed positions.

The holding means can comprise interengaging features on the first and second members, such as a projection on one of the members from which the weight, or an attachment thereof, can be suspended, the other member having a blocking part that blocks the projection and prevents release of the weight or weight attachment in the closed position.

Embodiments of the dropper include a biasing means urging at least one of the first and second members to the closed position. In one example, the biasing means comprises an elastic sleeve fitting over the first and second elements, wherein movement of the first and/or second element to the open position stretches the sleeve.

The abutment surface can be an end surface of the second member, for example an end which is an upper end in use of the dropper, and this can be a domed surface. Such a surface is suitable to be acted on by a swivel. The abutment surface can include an aperture arranged for threading of the fishing line therethrough.

The dropper may include a fixing lodged in a recess of the first member for attachment of the fishing line. The fixing may be a ring. Alternatively, the fishing line can be attached directly to the first member.

The dropper may include a recess, engageable by a peg, for maintaining the first and second members in the mutually closed position. This is for use if release of the weight is not required.

The invention also provides a helicopter rig including the dropper described above.

### Brief description of the drawings

Embodiments of the invention will now be described in more detail, by way of example only, with reference to the accompanying drawings, in which:
Figure 1 is a perspective view of a first member or jaw of a dropper;
Figure 2 is a perspective view of a second member or jaw of the dropper;
Figure 3 is a schematic, partly cut-away, view of a dropper including the jaws of Figures 1 and 2;
Figure 4 is schematic sectional view of the dropper of Figure 3;
Figure 5 shows the dropper in the open position; and
Figure 6 is a perspective view of a dropper according to an embodiment.

### Detailed description of the drawings

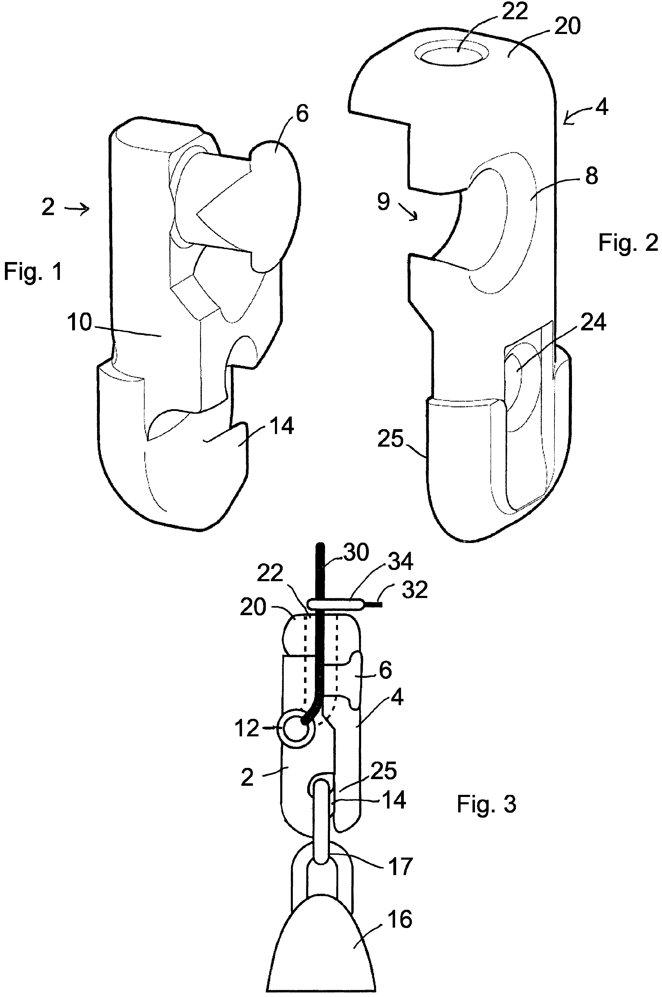

Figures 1 to 5 of the drawings show a dropper comprising an elongate first member 2 and an elongate second member 4. The members 2, 4 are called "jaws" herein. In the illustrated arrangement, the first member 2 and the second member 4 are elongate with respect to a longitudinal axis of the dropper.

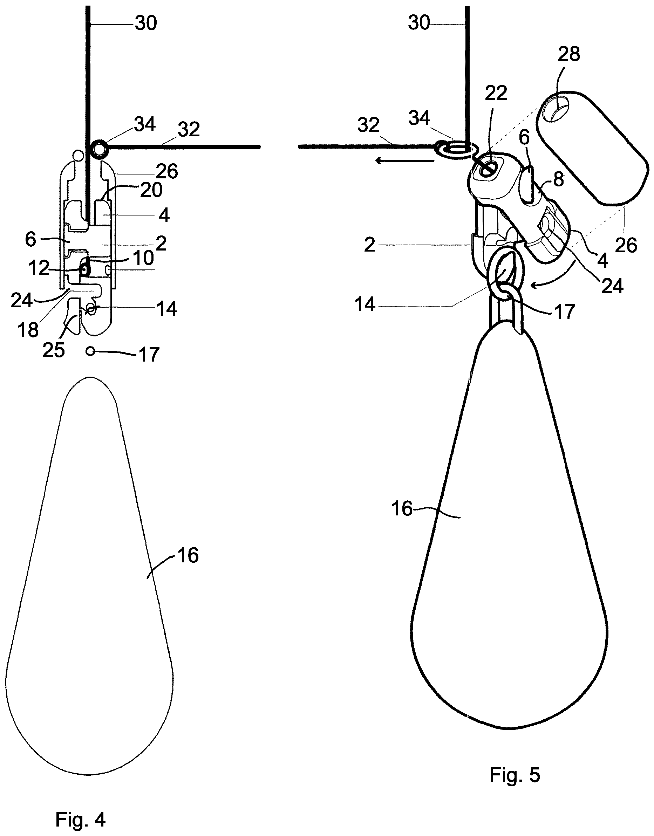

The first member or jaw 2 is pivotably connected with the second member or jaw 4. The connection is configured to provide an open position and a closed position of the dropper. The first jaw 2 and the second jaw 4 can be configured to close in a scissoring action (see Figure 5). For example, a surface of the first jaw 2 opposes a surface of the second jaw 4 and said surfaces remain in respective mutually parallel planes in both the open position and the closed position. The pivotable connection may be provided by a pivot pin or trunnion 6, and a corresponding aperture 8 of the second jaw 4 (see Figure 2). The aperture 8 is configured to constrain rotation of the first jaw 2 about a rotational axis defined by the trunnion 6. As shown in Figure 2, the rotational axis is normal to and offset from the longitudinal axis. In other words, while the rotational axis is perpendicular to the longitudinal axis, the rotational axis does not intersect the longitudinal axis.

The pivotable connection may be a releasable pivotable connection. The releasable pivotable connection may be configured to facilitate releasable attachment of the first jaw 2 to the second jaw 4. The releasable pivotable connection may be provided by the part-annular surface comprising a gap 9 (see Figure 2). The dropper may be configured such that the first jaw 2 can be releasably connected to the second member by inserting the trunnion 6 into the gap 9. As shown in Figure 2, the gap 9 is located on the second jaw 4 to facilitate insertion of the trunnion 6 into the gap 9 in a direction transverse to the rotational axis. The same is true for removal of the trunnion 6 from the gap 9. In other words, the first jaw 2 can be connected to the second jaw 4 from the side, i.e. in a direction perpendicular to the direction in which the trunnion 6 projects from the first jaw 2. The releasable connection may be a snap-fit, which may be provided by a flexion in the second jaw 4 to facilitate stretching of the gap 9 to accommodate the trunnion 6. In the arrangement shown, the first jaw 2 has a trunnion 6 which snaps into an arcuate aperture 8 of the second jaw 4, such that the second jaw can pivot about the trunnion 6.

In this example, the first jaw 2 has a surface 10 which retains a metallic O-ring 12, or any other type of fixing configured to attach a fishing line (such as a mainline) to the first jaw 2. The dropper comprises holding means to retain the weight 16 when the dropper is in the closed position and to allow release of the weight 16 when the dropper is in the open position. The holding means may comprise a projection 14 on the first jaw 2 and a blocking part 25 on the second jaw 4. The blocking part 25 may be configured to cooperate with the projection 14 to retain the weight 16 when the dropper is in the closed position. In the illustrated arrangement, near the bottom of the first jaw 2 is a weight hook 14 which provides the projection 14, from which a weight 16 is suspended in use. The first jaw 2 has a recess 18 above the weight hook 14. As shown in Figure 3, the blocking part 25 may be provided by a part of the second jaw 4 which corresponds to the location of the hook 14 when the dropper is in the closed position. It will be appreciated that references to a weight may include an element attached to a weight, such as a ring 17 or rings attached to the weight 16 and used for hanging the weight 16 from the hook 14, as shown in Figures 3-5.

The second jaw 4 may comprise an abutment surface 20 configured to provide a reaction surface for a hookline 32 of the helicopter rig, for example to provide a reaction surface of a swivel 34 of the hookline. The abutment surface 20 may comprise an aperture 22 configured for threading the mainline therethrough. The aperture may be provided around the longitudinal axis of the dropper. In the arrangement shown, the second jaw 4 has a bearing surface 20 at its top, with an aperture 22 therein. A through-hole 24 in the second jaw registers with the recess 18 when the jaws 2, 4 are in the closed position.

A biasing means can be configured to bias the dropper to the closed position. For example, an elastomeric sleeve 26, shown in Figure 4, fits over the jaws 2, 4. For clarity, the sleeve 26 is shown removed from the dropper in Figure 5. The sleeve 26 has an aperture 28 at its top, which registers with the aperture 22 of the second jaw 4. The sleeve 28 is provided around the longitudinal axis of the dropper. As shown in Figure 4, the sleeve 26 may have a shoulder on an interior wall thereof, which may be arranged to limit the extent to which the sleeve 28 can slide over the first jaw 2 and the second jaw 4 along the longitudinal axis. The shoulder may be located proximal to the abutment surface 20 of the second jaw 4 when the dropper is in the closed position. In addition to providing a biasing means, the sleeve 26 may provide the advantage of preventing or reducing ingress of dirt into the dropper.

A fishing line 30, which can be either a mainline or a leader, extends through the apertures 22, 28 and is tied to the O-ring 12 to secure it to the first jaw 2.

To form a helicopter rig, a hookline 32 is attached to the fishing line 30 by means of a swivel 34 through which the fishing line extends, so that the hookline 32 can rotate to any azimuth.

When a fish bites, tension is exerted in the hookline 32. If the swivel 34 is not already bearing against the bearing surface 20, it does so as a result of the strike. The combined effect of this action, and the tension transferred from the hookline 32 to the fishing line 30, causes relative movement of the jaws 2, 4 to the open position shown in Figure 5. In this position, the second jaw no longer covers the weight hook 14, which is exposed, releasing the weight 16.

The jaws 2,4 only move apart if tension is exerted in the hookline. Thus, the weight cannot be released inadvertently merely by excess tension between the weight and the angler.

In more detail, the dropper is configured such that, when no fish is hooked on the hookline 32, tension between the dropper and the angler (via the mainline 30) does not cause the dropper to move to the open position. This is because, with reference to Figure 4, if the tension in the mainline 30 is increased (e.g. from the angler moving the rod upwards), the dropper and the weight 16 will move upwards in the water and, since the hookline 32 is not under tension, it will also move upwards in the water by the action of the dropper (specifically, the top of the sleeve 28) pushing on the swivel 34. In contrast, when a fish is hooked on the hookline 32 it will become tensioned such that the swivel 34 is pushed against the abutment surface 20 (e.g. via the sleeve 28). Meanwhile, given that the mainline is threaded through the aperture 22 and past the trunnion 6 for fixing to the surface 10, it will be appreciated that tension in the mainline 30 pulls on the first jaw 2 and creates a moment of force with respect to the rotational axis. In particular, when the mainline (which is threaded along the longitudinal axis) is pulled, a force is exerted on the first jaw 2 in an upwards direction along the longitudinal axis (i.e., toward the aperture 22) and, given that the rotational axis between the first jaw 2 and the second jaw 4 is offset from the longitudinal axis, a moment is generated about the trunnion 6. Since the tension in the hookline 32 forces the swivel 34 against the sleeve 28 and the second jaw 4, the moment forces the first jaw 2 to pivot with respect to the second jaw 4 against the biasing force of the sleeve 28. As such, the sleeve stretches such that at least a bottom portion thereof is forced upwards relative to the dropper. Therefore, the dropper can move into the open position and the weight 16 can be released.

If it is desired that the weight 16 should not be released, a peg (not shown) can be inserted through the through-hole 24 into the recess 18. This keeps the jaws 2, 4 in the closed position even in the event of a strike.

It will be appreciated from the above description that many features of the different examples are interchangeable and combinable. The disclosure extends to further examples comprising features from different examples combined together in ways not specifically mentioned. Indeed, there are many features presented in the above examples and it will be apparent to the skilled person that these may be advantageously combined with one another.

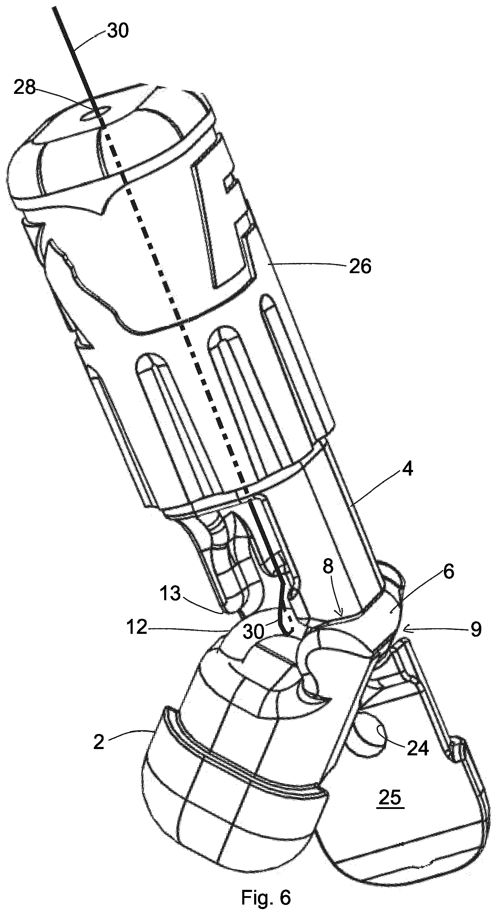

Figure 6 shows a dropper according to an embodiment. The dropper may have any or all of the features described in relation to Figures 1 to 5. In particular, the dropper has a first jaw 2, second jaw 4, and a sleeve 26. In the illustrated arrangement, the sleeve 26 has been moved upwards to reveal the dropper in the open configuration.

The first jaw 2 comprises a fixing 12 configured to attach to the mainline 30. The mainline 30 can be seen to thread through the aperture 28 of the sleeve 26, and along the longitudinal axis to be fixed to the first jaw 2 via the fixing 12. The first jaw 2 is pivotably connected to the second jaw 4 by a pivot pin or trunnion 6 of the first jaw 2 being received in an aperture 8 of the second jaw 4. The aperture 8 comprises a gap 9 configured to receive the trunnion 6. As shown in Figure 6, the rotational axis of the pivotable connection is offset from the longitudinal axis. As such, tension in the mainline 30 can act to pivot the first jaw 2 relative to the second jaw 4.

The second jaw 4 may comprise a stop 13. The stop 13 may be configured to limit the pivotal motion of the first jaw 2. In the arrangement shown, it can be seen that an additional pivoting of the first jaw 2 relative to the second jaw 4 (in a clockwise direction) will result in the first jaw 2 abutting the stop 13 such that no further rotation is possible.

Also shown in Figure 6 is the blocking part 25 which cooperates with the weight hook 14 (not shown in Figure 6). An aperture 24 may be comprised in the second jaw 4, for example in the blocking part 25 as shown in Figure 6. The aperture 24 is configured to receive a peg or a pin to prevent the dropper moving into the open configuration from the closed configuration.

The function of the dropper to move from the closed configuration to the open configuration when a fish is hooked on the hookline may be facilitated by arranging the first jaw such that the mainline fixing (e.g., the fixing 12) moves closer to the abutment surface 20 when the dropper moves to the open configuration. It will be appreciated that while the example illustrated in the figures has been described as having a rotational axis offset from the longitudinal axis, this is not essential for the function of the dropper.

While the example illustrated in the figures has been described as having a first jaw and a separable second jaw, these components may instead be formed from a single component. Such a dropper may be similar to the illustrated example, but instead of the trunnion 6 being received in the aperture 8, the two components may be permanently fixed together. The permanent fixation may be any flexible coupling, such as a living hinge. Therefore, the first member and the second member may be two parts of a single integral component.

While the first member and the second member have been described as moving between the open and closed positions in a scissoring action, it will be appreciated that the arrangement could be modified (e.g., by spinning the weight hook and the blocking part by 90 degrees) such that the members could move between the open and closed positions in a manner resembling the jaws of pliers.

While the biasing means has been described as an elastic sleeve, other embodiments are envisaged to provide the function of biasing the dropper to the closed position. For example, the dropper may comprise magnetic elements configured to bias the dropper to the closed position.

While a peg has been described to keep the jaws in the closed position, additionally or alternatively the jaws 2, 4 can be locked in the closed position by the elastic sleeve. In this respect, the elastic sleeve may have a first portion (e.g. the top half) that is flexible and a second portion (e.g. the bottom half) that is rigid. The first portion may be at the first longitudinal end of the sleeve and the second portion may be at the second longitudinal end. Considering the arrangement in Figure 6, the sleeve 26 could be modified to omit the domed end cap (in which the aperture 28 is comprised), so that the sleeve can be slid over the second jaw 4 (and the first jaw 2) via either end. Therefore, it will be appreciated that the sleeve may be arranged around the first member and the second member in two orientations: a first orientation in which the first portion biases the first member 2 (i.e. the flexible portion is at the bottom) and a second orientation in which the second portion biases the first member 2 (i.e. the rigid portion is at the bottom). In this way, when the rigid portion is provided at least partially around the first member 2, the dropper can be locked in its closed position because the force from the hookline is insufficient to overcome the biasing force provided by the rigid portion.

The disclosure may also be described by the following numbered clauses.
1. A dropper for a helicopter rig, the dropper comprising:
   a first member configured to be connected to a mainline of the helicopter rig;
   a second member pivotably connected to the first member so as to provide an open position and a closed position; and
   a biasing means configured to bias the dropper to the closed position;

   wherein the dropper comprises holding means configured to retain a fishing weight when the dropper is in the closed position and to allow release of the fishing weight when the dropper is in the open position; and
   wherein the dropper is arranged such that, when a fish is hooked on a hookline that is branched from the mainline, a resulting tension in the hookline and tension in the mainline causes the dropper to transition from the closed position to the open position.
2. The dropper of clause 1, wherein the biasing means comprises an elastic sleeve provided at least partially around the first member and the second member.
3. The dropper of clause 1 or clause 2, wherein the first member and the second member are elongate with respect to a longitudinal axis of the dropper, and wherein the first member and the second member are aligned with the longitudinal axis when the dropper is in the closed position.
4. The dropper of clause 3 as dependent on clause 2, wherein the elastic sleeve is provided around the longitudinal axis.
5. The dropper of clause 4, wherein the elastic sleeve has a first orientation and a second orientation, and wherein the elastic sleeve provides a greater biasing force in the second orientation than the first orientation.
6. The dropper of clause 5, wherein the elastic sleeve comprises a flexible section and a rigid section, and the elastic sleeve is configured such that the flexible section biases the dropper to the closed position when the sleeve is in the first orientation and the rigid section biases the dropper to the closed position when the sleeve is in the second orientation.
7. The dropper of any preceding clause, wherein the first member and the second member are configured to close with a scissoring action.
8. The dropper of any preceding clause, wherein the pivotable connection is provided by the first member comprising a pivot pin and the second member comprising a corresponding aperture.
9. The dropper of clause 8, wherein the aperture comprises a part-annular surface configured to constrain rotation of the first member about a rotational axis defined by the pivot pin.
10. The dropper of clause 8 or clause 9, wherein the pivotable connection is a releasable pivotable connection configured to facilitate releasable attachment of the first member to the second member.
11. The dropper of clause 10 as dependent on clause 9, wherein the releasable pivotable connection is provided by the part-annular surface comprising a gap, and wherein the dropper is configured such that the first member can be releasably connected to the second member by inserting the pivot pin into the gap.
12. The dropper of clause 11, wherein the gap is located on the second member to facilitate insertion of the pivot pin into, and removal of the pivot pin from, the gap in a direction transverse to the rotational axis.
13. The dropper of any of clauses 1 to 7, wherein the first member and the second member are comprised in a single integral component, and wherein the single integral component comprises a flexible coupling to provide the pivotable connection between the first member and the second member.
14. The dropper of any preceding clause, wherein the holding means comprises a projection on the first member and a blocking part on the second member, wherein the blocking part is configured to cooperate with the projection to retain the fishing weight when the dropper is in the closed position.
15. The dropper of any preceding clause, wherein the second member comprises an abutment surface configured to provide a reaction surface for the hookline of the helicopter rig, for example to provide a reaction surface for a swivel of the hookline.
16. The dropper of clause 15, wherein the abutment surface comprises an aperture configured for threading the mainline therethrough.
17. The dropper of clause 16 as dependent on clause 3, wherein the aperture is provided around the longitudinal axis of the dropper.
18. A helicopter rig comprising:
   a mainline;
   a hookline branched from the mainline so as to be freely rotatable thereabout; and
   a dropper, the dropper comprising:
      a first member configured to be connected to the mainline; and
      a second member pivotably connected to the first member so as to provide an open position and a closed position; and
      holding means configured to retain a fishing weight when the dropper is in the closed position and to allow release of the fishing weight when the dropper is in the open position.
19. The helicopter rig of clause 18, wherein the dropper further comprises a biasing means configured to bias the dropper to the closed position.
20. The helicopter rig of clause 18 or clause 19, wherein the second member comprises an abutment surface configured to provide a reaction surface for the hookline when a fish is hooked.
21. The helicopter rig of clause 20, wherein the hookline is branched from the mainline by a swivel provided around the mainline and connected to a proximal end of the hookline, and wherein the swivel is arranged to react against the abutment surface when a fish is hooked.
22. A dropper for a helicopter rig, the dropper comprising:
   a first member for attachment to a fishing line;
   a second member pivoted to the first member; and
   a holding means;

   wherein the first and second members are configured to cause the holding means to retain at least one fishing weight when in a mutually closed position and to allow release of the at least one fishing weight when in a mutually open position; and
   wherein the second member comprises an abutment surface arranged to be acted on at least indirectly by a hookline that is branched from the fishing line so as to be freely rotatable thereabout, to cause mutual opening of the first and second members when a fish is hooked.
23. The dropper of clause 22, configured such that the first member and the second member remain closed if tension is only exerted between the fishing weight and the fishing line.
24. The dropper of clause 22 or clause 23, wherein the first member and the second member are arranged to close with a scissoring action, for example wherein a surface of the first member opposes a surface of the second member and said surfaces remain in respective mutually parallel planes in both the open position and the closed position.
25. The dropper of any of clauses 22 to 24, wherein the holding means comprises interengaging features on the first member and the second member, for example a projection from the first member or the second member from which the fishing weight can be suspended, for example wherein the other member comprises a blocking part configured to block the projection and prevent release of the fishing weight in the closed position.
26. The dropper of any of clauses 22 to 25, further comprising a biasing means configured to urge at least one of the first member and the second member to the closed position, for example wherein the biasing means comprises an elastic sleeve fitted over the first member and the second member, for example wherein the elastic sleeve is configured such that movement of the first member and/or the second member to the open position stretches the elastic sleeve.
27. The dropper of any of clauses 22 to 26, wherein the abutment surface is an end surface of the second member, for example wherein the end surface is located at an upper end of the dropper, for example wherein the upper end is the end opposite to the end at which the holding means to retain the fishing weight is located, for example wherein the end surface is a domed surface.
28. The dropper of any of clauses 22 to 27, wherein the abutment surface comprises an aperture configured for threading the fishing line therethrough.
29. The dropper of any of clauses 22 to 28, further comprising a recess, wherein the recess is engageable by a peg for maintaining the first member and the second member in the mutually closed position.
30. The dropper of any of clauses 22 to 29, further comprising a fixing lodged in a recess of the first member, wherein the fixing is for attachment of the fishing line, for example wherein the fixing is a ring.
31. A helicopter rig comprising the dropper according to any of clauses 22 to 30.

## Claims

1. A dropper for a helicopter rig, the dropper comprising:
a first member configured to be connected to a mainline of the helicopter rig;
a second member pivotably connected to the first member so as to provide an open position and a closed position; and
a biasing means configured to bias the dropper to the closed position;
wherein the dropper comprises holding means configured to retain a fishing weight when the dropper is in the closed position and to allow release of the fishing weight when the dropper is in the open position; and
wherein the dropper is arranged such that, when a fish is hooked on a hookline that is branched from the mainline, a resulting tension in the hookline and tension in the mainline causes the dropper to transition from the closed position to the open position.

2. The dropper of claim 1, wherein the biasing means comprises an elastic sleeve provided at least partially around the first member and the second member.

3. The dropper of claim 1 or claim 2, wherein the first member and the second member are elongate with respect to a longitudinal axis of the dropper, and wherein the first member and the second member are aligned with the longitudinal axis when the dropper is in the closed position.

4. The dropper of claim 3 as dependent on claim 2, wherein the elastic sleeve is provided around the longitudinal axis.

5. The dropper of claim 4, wherein the elastic sleeve has a first orientation and a second orientation, and wherein the elastic sleeve provides a greater biasing force in the second orientation than the first orientation, and
optionally wherein the elastic sleeve comprises a flexible section and a rigid section, and the elastic sleeve is configured such that the flexible section biases the dropper to the closed position when the sleeve is in the first orientation and the rigid section biases the dropper to the closed position when the sleeve is in the second orientation.

6. The dropper of any preceding claim, wherein the first member and the second member are configured to close with a scissoring action.

7. The dropper of any preceding claim, wherein the pivotable connection is provided by the first member comprising a pivot pin and the second member comprising a corresponding aperture,
optionally wherein the aperture comprises a part-annular surface configured to constrain rotation of the first member about a rotational axis defined by the pivot pin, and
optionally wherein the pivotable connection is a releasable pivotable connection configured to facilitate releasable attachment of the first member to the second member.

8. The dropper of claim 7, wherein the releasable pivotable connection is provided by the part-annular surface comprising a gap, and wherein the dropper is configured such that the first member can be releasably connected to the second member by inserting the pivot pin into the gap, and
optionally wherein the gap is located on the second member to facilitate insertion of the pivot pin into, and removal of the pivot pin from, the gap in a direction transverse to the rotational axis.

9. The dropper of any of claims 1 to 6, wherein the first member and the second member are comprised in a single integral component, and wherein the single integral component comprises a flexible coupling to provide the pivotable connection between the first member and the second member.

10. The dropper of any preceding claim, wherein the holding means comprises a projection on the first member and a blocking part on the second member, wherein the blocking part is configured to cooperate with the projection to retain the fishing weight when the dropper is in the closed position.

11. The dropper of any preceding claim, wherein the second member comprises an abutment surface configured to provide a reaction surface for the hookline of the helicopter rig, for example to provide a reaction surface for a swivel of the hookline, and
optionally wherein the abutment surface comprises an aperture configured for threading the mainline therethrough.

12. The dropper of claim 11 as dependent on claim 3, wherein the aperture is provided around the longitudinal axis of the dropper.

13. A helicopter rig comprising:
a mainline;
a hookline branched from the mainline so as to be freely rotatable thereabout; and
a dropper, the dropper comprising:
a first member configured to be connected to the mainline; and
a second member pivotably connected to the first member so as to provide an open position and a closed position; and
holding means configured to retain a fishing weight when the dropper is in the closed position and to allow release of the fishing weight when the dropper is in the open position.

14. The helicopter rig of claim 13, wherein the dropper further comprises a biasing means configured to bias the dropper to the closed position.

15. The helicopter rig of claim 13 or claim 14, wherein the second member comprises an abutment surface configured to provide a reaction surface for the hookline when a fish is hooked, and
optionally wherein the hookline is branched from the mainline by a swivel provided around the mainline and connected to a proximal end of the hookline, and wherein the swivel is arranged to react against the abutment surface when a fish is hooked.
